# EUROPEAN PATENT SPECIFICATION

(11) **EP 1 964 672 B1**
(45) Date of publication and mention of the grant of the patent: **18.05.2011**
(21) Application number: 06834276.5
(22) Date of filing: 08.12.2006
(51) Int. Cl.: B32B 27/32, D06N 3/00

(54) **RELEASE SHEET**
TRENNFOLIE
FEUILLE ANTI-ADHÉRENTE

(30) Priority: 22.12.2005 JP 2005370427
(43) Date of publication of application: 03.09.2008
(73) Proprietor: Lintec Corporation, Tokyo 173-0001 (JP)
(72) Inventor: SASAKI, Yasushi, Itabashi-ku, Tokyo;1730001 (JP); TANIWAKI, Fujio, Itabashi-ku, Tokyo 1730001 (JP)
(74) Representative: Gille Hrabal Struck Neidlein Prop Roos
(86) International application number: PCT/JP2006/324521
(87) International publication number: WO 2007/072696

(56) References cited:
- EP-A- 1 149 693
- DE-A1- 10 238 516
- JP-A- 06 218 892
- JP-A- 07 276 588
- JP-A- 10 217 692
- JP-A- 2000 301 677
- JP-A- 2001 011 207
- JP-A- 2003 103 711
- JP-A- 2004 189 972

## Description

### TECHNICAL FIELD

The present invention relates to a mold release sheet which is repeatedly used as a process sheet in producing resin films for uses such as synthetic leathers and the like, more specifically to a mold release sheet in which a curling phenomenon brought about in a process of producing resin films is relieved.

### BACKGROUND ART

Synthetic leathers and the like have so far been produced by a method (dry method) in which a urethane resin, a vinyl chloride resin, a polyamide resin and the like are coated on a mold release sheet and dried and in which it is, if necessary, laminated on a base cloth. Further, they are produced as well by a method (wet method) in which, for example, a urethane resin is coated on a water-resistant mold release sheet to form a urethane resin layer, in which a base cloth is stuck to the urethane resin layer on the above mold release sheet and then introduced into a coagulation bath to coagulate the urethane resin and form a film and in which it is washed with water and dried.

In producing the synthetic leathers and the like by the methods described above, a sheet is used as a mold release sheet, in which a paper or a plastic film is used as a substrate and in which a release layer is formed on a surface thereof by various resin compositions.

Of those, a polyolefin-based polymer such as a polypropylene is used as a preferred resin of a low cost for a release agent.

For example, a patent document 1 discloses a mold release sheet in which a releasing resin layer comprising an intermediate layer comprising a polyethylene-based resin having a melting point of 120°C or higher and a surface layer comprising a homopolypropylene resin or a polymethylpentene resin having a melting point of 160°C or higher is laminated on a substrate sheet is disclosed.

Also, in an inline embossing step in steps of producing a resin film for synthetic leathers, a mold release sheet having patterns on a surface of a release layer is used to transfer the patterns on a surface of the resin film, whereby the resin film provided with the patterns is produced. The release layer of the mold release sheet has to be inevitably increased in a thickness in order to transfer the deep patterns on the surface of the resin film.

Further, in a case in which a solution containing a resin is coated on a release layer of a mold release sheet by a dry method and dried and in which a base cloth is stuck, if necessary, thereon via an adhesive layer, it has to be heated at high temperature in a drying step.

Also, even when a resin film is formed on a release layer of a mold release sheet by a wet method, the mold release sheet has to be heated and dried after a coagulation step of the resin and a step of washing it with water. When the mold release sheet described above in which a release layer having a large thickness is formed from a crystalline polyolefin-based resin is dried by heating, it is curled, and therefore the workability in repeated use is deteriorated.

It is described that the above problem can be solved by providing resin layers on both surfaces of a substrate sheet in the mold release sheet shown in the patent document 1. However, the above method involves the problems that when using a paper for the substrate, the release layer is foamed by vaporization of a moisture contained in the paper in a heating and drying step to make it impossible to reuse the mold release sheet and that the production cost is increased.

Patent document 1: JP-A-2003103711

### DISCLOSURE OF THE INVENTION

### PROBLEMS TO BE SOLVED BY THE INVENTION

Under the above circumstances, the present invention aims at relieving a curling phenomenon after heating and drying in a mold release sheet in which a thick release layer comprising a crystalline polyolefin resin layer is formed on one surface of a substrate.

### MEANS FOR SOLVING THE PROBLEMS

Various researches repeated by the present inventors in order to solve the problems described above have resulted in finding that in a mold release sheet in which a thick release+ layer is formed on one surface of a substrate, the above release layer is allowed to assume a multilayer structure comprising an intermediate layer composed of a specific material I for forming a coating film and a surface layer composed of a material II for forming a coating film containing a crystalline polyolefin resin, whereby the object described above can be achieved, and thus the present inventors have reached the present invention.
The matter for which protection is sought is defined in the appended claims.

### EFFECT BY THE INVENTION

Provided by the present invention is a mold release sheet used in producing resin films such as synthetic leathers and the like in which a curling phenomenon is relieved even when the sheet composed of a thick release layer and which has a good workability in repeated use.

### BEST MODE FOR CARRYING OUT THE INVENTION

In the mold release sheet of the present invention, used as the substrate are papers such as craft papers, woodfree papers, simili papers, art paper and coat papers, laminated papers obtained by laminating a polyethylene and the like on the above paper substrates and synthetic papers.
The paper basis weight is not specifically restricted, and it is preferably 30 to 300 g/m², more preferably 40 to 200 g/m².
Setting a range of a basis weight of the papers to the levels described above makes it possible to maintain well the mechanical aptitude in laminating the surface layer formed by using the material II for forming a coating film on the substrate via the intermediate layer and producing resin films such as synthetic films, facilitates winding the mold release sheet on a roll for transporting and storing it, does not increase a frequency of exchanging a roll of the mold release sheet and makes it possible to maintain the productivity at a high level.
The mold release sheet of the present invention is characterized in that in the mold release sheet described above in which a release layer is formed on one surface of a substrate, the above release layer assumes a multilayer structure which comprises an intermediate layer formed on a substrate side by using a material I for forming a coating film containing an amorphous polyolefin resin (A) alone or a resin mixture (B) composed of an amorphous polyolefin resin and a crystalline polyolefin resin and which comprises a surface layer formed on the intermediate layer by using a material II for forming a coating film containing a crystalline polyolefin resin.
The crystalline polyolefin resin which is used as an essential component for forming the surface layer and which is used as an optional component for forming the intermediate layer is preferably a crystalline polypropylene-based resin. Among polypropylene-based resins, allowed to be used are homopolymers having principally an isotactic or syndiotactic sequence structure, copolymers of a random type and a block type containing ethylene or at least one comonomer component of α-olefins such as 1-butene, 1-pentene and the like and polymers obtained by blending homopolymers of propylene with polyethylene. It is a resin which has a crystal melt calorie of 30 to 120 J/g and preferably 60 to 120 J/g measured using a differential scanning calorimeter (DSC) according to JIS K7122 and in which a position (melting point) of a principal peak based on melting of crystal is preferably 80 to 176°C, more preferably 120 to 176°C. It may be a polyethylene-based resin such as high density to low density polyethylene, linear low density polyethylene and the like and a polybutene-based resin as long as a crystal melt calorie and a melting point thereof fall in the ranges described above. A number average molecular weight of the crystalline polyolefin resin is not specifically restricted, and it is preferably 10,000 to 1,000,000.
The specific examples of the above crystalline polyolefin resin include polypropylene "PH903A" manufactured by Sun Allomer Ltd., polypropylene "FL25T" and "FL25HA" manufactured by Japan Polychem Co. Ltd., polypropylene "F109V" manufactured by Prime Polymer Co. Ltd. and the like.
The crystalline polyolefin resin used for forming the surface layer can be blended as well with other resins and various additives as long as the effects of the present invention are not damaged. The crystalline polyolefin resin used for the surface layer may be the same as or different from the crystalline polyolefin resin used as an optional component for the intermediate layer.

The amorphous polyolefin resin used as an essential component for forming the intermediate layer does not have both of a peak of 1 J/g or more based on melting of crystal and a peak of 1 J/g or more based on crystallization which are measured by means of DSC according to JIS K7122.
The amorphous polyolefin resin includes amorphous olefin-based copolymers obtained by copolymerizing ethylene and α-olefin having 3 to 20 carbon atoms as essential components with at least one monomer component optionally selected from polyene compounds, cyclic olefins and aromatic vinyl compounds, amorphous olefin base copolymers obtained by copolymerizing ethylene, propylene and α-olefin having 4 to 20 carbon atoms as essential components with at least one monomer component optionally selected from polyene compounds, cyclic olefins and aromatic vinyl compounds, amorphous olefin base copolymers obtained by copolymerizing propylene and α-olefin having 4 to 20 carbon atoms as essential components with at least one monomer component optionally selected from polyene compounds, cyclic olefins and aromatic vinyl compounds and amorphous olefin-based copolymers comprising ethylene, α-olefins having 4 to 20 carbon atoms and a polyene compound.
In particular, a propylene-1-butene copolymer having a propylene unit content of 50 to 99% by mass is preferred, and the copolymer having a propylene unit content of about 95% by mass is particularly preferred.
The specific examples of the above amorphous polyolefin resin include polypropylene "Tafcelene X-1102" and "Tafcelene X-1104" manufactured by Sumitomo Chemical Co. Ltd.

The material I for forming coating film used for forming the intermediate layer may be the amorphous polyolefin resin (A) alone or the resin mixture (B) composed of the amorphous polyolefin resin and the crystalline polyolefin resin, and it is preferably the amorphous polyolefin resin (A) alone. In the case of the resin mixture (B), a content of the amorphous polyolefin resin in the above mixture is preferably at least 40% by mass, more preferably at least 50% by mass.
As described above, the material I for forming a coating film containing the amorphous polyolefin resin (A) alone or the resin mixture (B) composed of at least 40% by mass of the amorphous polyolefin resin and the crystalline polyolefin resin is used to form the intermediate layer, whereby a mold release sheet in which a curling phenomenon is relieved can be obtained.
In the case of either the amorphous polyolefin resin (A) alone or the resin mixture (B), it can be mixed with other resins and various additives as long as the effects of the present invention are not damaged.

The surface layer described above has a thickness of preferably 10 to 60µm, more preferably 15 to 55µm, and the intermediate layer has a thickness of preferably 30 to 500µm, more preferably 50 to 150µm.
A thickness obtained by totalling both (that is, a thickness of the release layer) is preferably 40 to 560µm, more preferably 65 to 205µm, and "a thickness of the surface layer" and "a thickness of the intermediate layer" are preferably set so that a relational equation of "a thickness of the surface layer"<"a thickness of the intermediate layer" is satisfied.
Setting the thicknesses of the surface layer and the intermediate layer to the ranges described above enables to form deep patterns in the release layer comprising the surface layer and the intermediate layer and makes it possible to relieve a curling phenomenon of the mold release sheet. Further, troubles are not caused in winding the mold release sheet on a roll for transporting and storing. In general, the intermediate layer and the surface layer are usually provided on the substrate by coextrusion molding, tandem molding by a single extruding machine or twice extrusion molding by a single extruding machine which is usually used.

In order to provide patterns on the surface of the release layer, a method in which patterns are transferred onto a molten resin for forming the release layer by means of a cooling roll having a different gloss or a cooling roll having irregularities is applied, or a method in which the release layer composed of the intermediate layer and the surface layer is provided on the substrate, thereafter a transfer roll (different in a gloss or having irregular patterns) face is ransferred thereon by heat and pressure is applied.

### EXAMPLES

Subsequently, the present invention is explained in further details with reference to Examples, but the present invention is not restricted at all by the Examples shown below

### <Materials for preparing mold release sheet>

(1) Substrate: woodfree paper (basis weight: 127.9g/m²)
(2) Crystalline polyolefin resin: polypropylene "PH903A" (polypropylene homopolymer/low density polyethylene = 86/14 (mass ratio)) blend (number average molecular weight: 32000) manufactured by Sun Allomer Ltd.
   A crystal melt calorie of a principal peak measured by DSC according to JIS K7122 in the above crystalline polyolefin resin was 82J/g, and a position (melting point) of a principal peak based on melting of crystal was 162°C.
(3) Amorphous polyolefin resin: polypropylene "Tafcelene X-1102" [propylene-1-butene copolymer (propylene monomer content: 95% by mass)] manufactured by Sumitomo Chemical Co. Ltd.
Both of a peak based on melting of crystal in which a crystal melt calorie measured by DSC according to JIS K7122 was 1J/g or more and a peak based on crystallization were not observed in the above amorphous polyolefin resin.

### Example 1

Coextrusion processing was carried out at a molten resin temperature of 280°C by a multilayer T die melt extruding machine having a screw size of 30 mmφ to prepare a mold release sheet.
The above mold release sheet is provided on one face of the woodfree paper described above with an intermediate layer (thickness: 80µm) comprising a mixed resin obtained by melt-blending the crystalline polyolefin resin with the amorphous polyolefin resin described above in 50/50 (mass ratio) and provided on the intermediate layer with a surface layer (thickness: 20 µm) composed of the crystalline polyolefin resin described above.

### Example 2

A mold release sheet was prepared in the same manner as in Example 1, except that a thickness of the surface layer was changed to 30µm and that a thickness of the intermediate layer was changed to 70µm.

### Example 3

A mold release sheet was prepared in the same manner as in Example 1, except that a thickness of the surface layer was changed to 30µm and that the resin of the intermediate layer was exchanged for the amorphous polyolefin resin alone and a thickness thereof was changed to 120µm.

### Example 4

A mold release sheet was prepared in the same manner as in Example 1, except that a thickness of the surface layer was changed to 50µm and that the resin of the intermediate layer was exchanged for the amorphous polyolefin resin alone and a thickness thereof was changed to 100µm.

### Comparative Examples 1 and 2

Mold release sheets were prepared in the same manner as in Example 1, except that the thicknesses of the surface layers were changed to 100µm and 150µm, respectively, and that the intermediate layer was not formed.

The mold release sheets prepared in the respective examples and comparative examples described above were evaluated for a curling property, a coating workability of a polyurethane resin, a heat resistance and a releasing property, and the results thereof are summarized in Table 1.

### <Evaluation methods>

### 1. Curling property:

The mold release sheets obtained in the respective examples and comparative examples were cut to a length of 100 mm in an extrusion direction (vertical direction) and a length of 120 mm in a width direction in coextrusion processing to prepare sample pieces. The sample piece was put on a horizontal table so that a surface layer was turned upward and then left as it was at room temperature for 5 minutes. An average value of the heights of the four corners coming up from the horizontal table in the above sample piece was measured and shown as "A", and an average value of distances between the left and right end parts in the vertical direction of the mold release sheet was measured and shown as "B" (a unit is "mm" in both of "A" and "B"). "A" and "B" after left as it was under atmosphere of 100°C for 5 minutes were measured in the same manner. The samples in which an average value of the heights of the four corners coming up was the smallest and in which an average value of the distances between the left and right end parts was the largest were marked with Ⓞ; the samples in which the four corners came up slightly but were close to horizontal were marked with O; the samples in which the average values were not satisfactory but which could be used in terms of practical use were marked with Δ. The results thereof are shown in Table 1.
The mold release sheets prepared in Comparative Examples 1 and 2 were turned into a cylindrical form after heated, and therefore a diameter of the cylinder is shown in Table 1.

### 2. Coating workability of polyurethane resin:

A thermoplastic polyurethane resin (Crisvon 7367SL, manufactured by Dainippon Ink & Chemicals Inc.) was diluted to a concentration of 20% by mass by methyl ethyl ketone to prepare a polyurethane resin solution. This resin solution was coated on a surface layer side of the mold release sheet having a surface layer comprising the crystalline polyolefin resin described above by means of an applicator bar so that a thickness of the wet layer was 125µm, and then it was dried at 100°C for 5 minutes to prepare a polyurethane resin film which was a skin layer of a synthetic leather. The above polyurethane resin film was peeled from the surface layer to evaluate a workability observed when coating once again the polyurethane resin solution by the same method.
A case in which curling of the mold release sheet was large to bring about troubles to a coating work is marked with X; a case in which the workability was passable is marked with Δ; and a case in which the workability had no problems is marked with O. The results thereof are shown in Table 1.

### 3. Heat resistance test:

A mixture prepared by blending 100 parts by mass of Crisvon 4010 manufactured by Dainippon Ink & Chemicals Inc. with 10 parts by mass of Crisvon NX (an isocyanate-based curing agent) was coated as an adhesive layer on a polyurethane resin film prepared in the same procedure as in the item "2" described above so that a thickness of a coating film in a wet state was 125µm. Then, a base cloth for a synthetic leather was laminated thereon before heating and drying and dried at 100°C for 5 minutes. After cooled down to room temperature, the mold release sheet was peeled to obtain a synthetic leather. The peeled mold release sheet was used to repeat twice for the operation described above. This is referred to as a twice repeated product.
A gloss on the surface of the synthetic leather prepared first was visually compared with a gloss of the twice repeated product.
A case in which a difference in the gloss was not observed is marked with O; a case in which the difference was slightly observed but judged to remain in an acceptable level is marked with Δ; and a case in which the difference was judged to be unacceptable is marked with X. The results thereof are shown in Table 1.

### 4. Peeling property test:

A peeling resistance in peeling a synthetic leather prepared in the same manner as in the item "3" described above was examined, wherein a case in which it stayed in a problem-free level (coming up was not caused in an interface before peeling or the mold release sheet was not broken) and could smoothly be peeled off is marked with O, and a case in which peeling was felt rather tight but provided no problems in terms of practical use is marked with Δ. The results thereof are shown in Table 1.

**Table 1**

| | Unit | Example | | | | | | | | Comparative Example | | | |
|---|---|---|---|---|---|---|---|---|---|---|---|---|---|
| | | 1 | | 2 | | 3 | | 4 | | 1 | | 2 | |
| Thickness of surface layer | *µ*m | 20 | | 30 | | 30 | | 50 | | 100 | | 150 | |
| Thickness of intermediate layer | *µ*m | 80 | | 70 | | 120 | | 100 | | None | | None | |
| Thickness of release layer (surface layer + intermediate layer) | *µ*m | 100 | | 100 | | 150 | | 150 | | 100 | | 150 | |
| Curled height | | A | B | A | B | A | B | A | B | A | B | A | B |
| No heating | mm | 30 | 105 | 48 | 50 | 15 | 115 | 40 | 65 | 38 | 45 | 40 | 29 |
| 100°C × 5 minutes | mm | 40 | 15 | 45 | 10 | 30 | 90 | 45 | 5 | Turned a into cylindrical form (25φ) | | Turned a into cylindrical form (28φ) | |
| Judgment of curling property | - | ○ | | ○ | | Ⓞ | | Δ | | × | | X | |
| Coating workability of polyurethane resin | - | ○ | | Δ | | ○ | | Δ | | × | | X | |
| Heat resistance test | - | ○ | | ○ | | ○ | | ○ | | ○ | | O | |
| Peeling property test | - | ○ | | ○ | | ○ | | ○ | | ○ | | O | |

As apparent from Table 1, all characteristics of the mold release sheets of the present invention obtained in the Examples stay in acceptable levels. On the other hand, the mold release sheets obtained in the Comparative examples are curled in a large degree and turned into a cylindrical form. In addition thereto, they are inferior as well in a coating property of the polyurethane resin, and therefore they can not be put to practical use.

### INDUSTRIAL APPLICABILITY

According to the present invention, a mold release sheet in which a curling phenomenon brought about in a process of producing resin films is relieved is provided, and the above mold release sheet is useful when repeatedly used as a process sheet in producing resin films in uses such as synthetic leathers and the like.

## Claims

1. A mold release sheet in which a release layer is formed on one surface of a substrate of paper, wherein the above release layer assumes a multilayer structure which comprises an intermediate layer formed on a substrate side by using a material I for forming a coating film containing an amorphous polyolefin resin (A) which does not have both of a peak of 1 J/g or more based on melting of crystal and a peak of 1 J/g or more based on crystallization measured using a differential scanning calorimeter according to JIS K7122 alone, or a resin mixture (B) composed of said amorphous polyolefin resin and a crystalline polyolefin resin which has a crystal melt calorie of 30 to 120 J/g measured using a differential scanning calorimeter according to JIS K7122, and which comprises a surface layer formed on the intermediate layer by using a material II for forming coating film containing a crystalline polyolefin resin which has a crystal melt calorie of 30 to 120 J/g measured using a differential scanning calorimeter according to JIS K7122.

2. The mold release sheet as claimed in claim 1, wherein the amorphous polyolefin resin in the resin mixture (B) has a content of at least 40% by mass.

3. The mold release sheet as claimed in claim 1 or 2, wherein the crystalline polyolefin resin is a crystalline polypropylene base resin in which a position (melting point) of a principal peak based on melting of crystal obtained by measuring using a differential scanning calorimeter according to JIS K7122 is 80 to 176°C.

4. The mold release sheet as claimed in claim 3, wherein the crystalline polypropylene base resin is a propylene homopolymer.

5. The mold release sheet as claimed in Claim 3 or 4, wherein the amorphous polyolefin resin is a propylene-1-butene copolymer.

6. The mold release sheet as claimed in claim 5, wherein the propylene-1-butene copolymer has a propylene unit content of 50 to 99% by mass.

7. The mold release sheet as claimed in any one of claims 1 to 6, wherein the intermediate layer has a thickness of 30 to 500 µm.

8. The mold release sheet as claimed in any one of claims 1 to 7, wherein the surface layer has a thickness of 10 to 60 µm.

## Patentansprüche

1. Formtrennfolie, in der eine Trennschicht auf einer Oberfläche eines Substrats aus Papier ausgebildet ist, wobei die obige Trennschicht eine Mehrschichtstruktur annimmt, welche eine Zwischenschicht umfasst, die auf einer Substratseite unter Verwendung eines Materials I zur Bildung eines Beschichtungsfilms ausgebildet ist, welcher nur ein amorphes Polyolefinharz (A) enthält, das sowohl keinen Peak von 1J/g oder mehr basierend auf dem Schmelzen von Kristallen als auch keinen Peak von 1J/g oder mehr basierend auf der Kristallisation aufweist, gemessen unter Verwendung eines Differentialscanningkalorimeters nach JIS K7122 aufweist, oder eine Harzmischung (B), aufgebaut aus dem besagten amorphen Polyolefinharz und einem kristallinen Polyolefinharz, welches eine Kristallschmelzwärme von 10 bis 120 J/g aufweist, gemessen unter Verwendung eines Differentialscanningkalorimeters nach JIS K7122,
und welche eine Oberflächenschicht umfasst, die auf der Zwischenschicht unter Verwendung eines Materials II zur Bildung eines Beschichtungsfilms ausgebildet ist, der ein kristallines Polyolefinharz enthält, welches eine Kristallschmelzwärme von 30 bis 120 J/g aufweist, gemessen unter Verwendung eines Differentialscanningkalorimeters nach JIS K7122.

2. Formtrennfolie wie in Anspruch 1 beansprucht, wobei das amorphe Polyolefinharz in der Harzmischung (B) einen Anteil von mindestens 40 Gew.-% ausmacht.

3. Formtrennfolie wie in Anspruch 1 oder 2 beansprucht, wobei das kristalline Polyolefinharz ein kristallines Harz auf Polypropylenbasis ist, in dem eine Position (Schmelzpunkt) eines Hauptpeaks, basierend auf Schmelzen eines Kristalls, erhalten durch Messung unter Verwendung eines Differentialscanningkalorimeters nach JIS K7122, 80 bis 176°C beträgt.

4. Formtrennfolie wie in Anspruch 3 beansprucht, wobei das kristalline Harz auf Polypropylenbasis ein Propylenhomopolymer ist.

5. Formtrennfolie wie in Anspruch 3 oder 4 beansprucht, wobei das amorphe Polyolefinharz ein Propylen-1-Buten-Copolymer ist.

6. Formtrennfolie wie in Anspruch 5 beansprucht, wobei das Propylene-1-Buten-Copolymer einen Gehalt an Propyleneinheiten von 50 bis 99 Gew.-% aufweist.

7. Formtrennfolie wie in einem der Ansprüche 1 bis 6 beansprucht, wobei die Zwischenschicht eine Dicke von 30 bis 500 µm aufweist.

8. Formtrennfolie wie in einem der Ansprüche 1 bis 7 beansprucht, wobei die Oberflächenschicht eine Dicke von 10 bis 60 µm aufweist.

## Revendications

1. Feuille anti-adhérente pour moulage dans laquelle une couche de démoulage est formée sur une surface d'un substrat de papier, dans laquelle la couche de démoulage susmentionnée adopte une structure multicouche qui comprend une couche intermédiaire formée sur une côté du substrat en utilisant un matériau I pour former un film de revêtement contenant une résine de polyoléfine amorphe (A) qui n'a ni un peak de 1 J/g ou plus à base de la fonte de cristal ni un peak de 1 J/g ou plus à base de la cristallisation mesurée en utilisant un calorimètre à balayage différentiel selon JIS K7122 seulement, ou un mélange de résine (B) composée de ladite résine de polyoléfine amorphe et d'une résine de polyoléfine cristalline qui a une chaleur de fusion de cristal de 30 à 120 J/g mesurée en utilisant un calorimètre à balayage différentiel selon JIS K7122 et qui comprend une couche superficielle formée sur la couche intermédiaire en utilisant un matériau II pour former un film de revêtement contenant une résine de polyoléfine cristalline qui a une chaleur de fusion de cristal de 30 à 120 J/g mesurée en utilisant un calorimètre à balayage différentiel selon JIS K7122.

2. Feuille anti-adhérente pour moulage selon la revendication 1, dans laquelle la résine de polyoléfine amorphe dans le mélange de résine (B) a un teneur d'au moins 40 % massique.

3. Feuille anti-adhérente pour moulage selon la revendication 1 ou 2, dans laquelle la résine de polyoléfine cristalline est une résine cristalline à base de polypropylène dans laquelle une position (point de fusion) d'un peak principal à base de la fonte de cristal obtenu par mesurer en utilisant un calorimètre à balayage différentiel selon JIS K7122 est 80 à 176 °C.

4. Feuille anti-adhérente pour moulage selon la revendication 3, dans laquelle la résine cristalline à base de polypropylène est un homopolymère de propylène.

5. Feuille anti-adhérente pour moulage selon la revendication 3 ou 4, dans laquelle la résine de polyoléfine amorphe est un copolymère de propylène-1-butène.

6. Feuille anti-adhérente pour moulage selon la revendication 5, dans laquelle le coploymere de propylène-1-butene a un teneur d'unités propylène de 50 à 99 % massique.

7. Feuille anti-adhérente pour moulage selon la revendication 1 à 6, dans laquelle la couche intermédiaire a une épaisseur de 30 à 500 µm.

8. Feuille anti-adhérente pour moulage selon l'une des revendications 1 à 7, dans laquelle la couche superficielle a une épaisseur de 10 à 60 µm.
